# EUROPEAN PATENT APPLICATION

(11) **EP 2 833 509 A1**
(43) Date of publication of application: **04.02.2015**
(21) Application number: 12873131.2
(22) Date of filing: 26.12.2012
(51) Int. Cl.: H02J 17/00, B60L 11/18

(54) **POWER TRANSMISSION SYSTEM**

(30) Priority: 30.03.2012 JP 2012078544
(71) Applicant: Equos Research Co., Ltd., Tokyo 101-0021 (JP)
(72) Inventor: YAMAKAWA, Hiroyuki, Chiyoda-ku Tokyo 101-0021 (JP); ITO, Yasuo, Chiyoda-ku Tokyo 101-0021 (JP)
(74) Representative: TBK
(86) International application number: PCT/JP2012/083700
(87) International publication number: WO 2013/145488

(57) **Abstract**

What is provided is an electric power transmission system that can properly recognize, from a coupling coefficient, a positional change between a power transmission antenna and a power receiving antenna and can efficiently transmit electric power.

An electric power transmission system of the present invention is characterized by including: an inverter unit 130 that converts DC voltage to AC voltage of a predetermined frequency to output; a power transmission antenna 140 to which AC voltage is input from the inverter unit 130; a power transmission control unit 150 that controls a voltage value of DC voltage input to the inverter unit 130, and a frequency of AC voltage output by the inverter unit 130; and a power receiving antenna 210 that faces the power transmission antenna 140 and is for transmission of electric energy from the power transmission antenna 140 via electromagnetic fields, and current flowing through the inverter unit 130, wherein, based on current flowing through the inverter unit 130, a coupling coefficient between the power transmission antenna 140 and the power receiving antenna 210 is calculated.

## Description

### Technical Field

The present invention relates to a wireless electric power transmission system that uses a magnetic resonance antenna of a magnetic resonance method.

### Background Art

In recent years, development of technology for wirelessly transmitting electric power (electric energy) without using power supply cords and the like has become popular. Among methods for wirelessly transmitting electric power, the technique called a magnetic resonance method is gaining particular attention. The magnetic resonance method was proposed by a research group at the Massachusetts Institute of Technology in 2007. The related technology is disclosed in Patent Document 1 (JP2009-501510A), for example.

In a wireless electric power transmission system of the magnetic resonance method, a resonance frequency of a power transmission antenna is equal to a resonance frequency of a power receiving antenna. Therefore, from the power transmission antenna to the power receiving antenna, energy can be efficiently transmitted. One of major features is that the power transmission distance can be from several tens of centimeters to several meters.

In the above wireless electric power transmission system of the magnetic resonance method, if one of the antennas is mounted on a moving object such as an electric vehicle, the arrangement of the antennas would change each time the transmission of electric power is carried out. Accordingly, the frequency that gives an optimum electric power transmission efficiency would vary. Therefore, what is proposed is a technique for determining an optimum frequency for actual transmission of power by sweeping frequencies before the transmission of electric power takes place. For example, what is disclosed in Patent Document 2 (JP2010-68657A) is: a wireless electric power transmission device, which includes AC power output means for outputting AC power of a predetermined frequency, a first resonance coil, and a second resonance coil that is disposed in such a way as to face the first resonance coil and in which AC power output from the AC power output means is output to the first resonance coil and the AC power is transmitted to the second resonance coil in a non-contact manner through resonance phenomena, is characterized by including frequency setting means for measuring a resonance frequency of the first resonance coil and a resonance frequency of the second resonance coil and setting the frequency of the AC power output from the AC power output means to an intermediate frequency of the resonance frequencies.
Patent Document 1: JP2009-501510A
Patent Document 2: JP2010-68657A

### Summary of the Invention

### Problems to be Solved by the Invention

The electric power transmission system disclosed in Patent Document 2 is expected to be used in a system that charges vehicles such as electric vehicles (EV). Such an electric power transmission system is provided in a parking space where a vehicle can be stopped. A user of the vehicle parks the vehicle in the parking space in which the electric power transmission system is provided. A power receiving antenna mounted on the vehicle receives electric power from the electric power transmission system.

When the vehicle is parked in the parking space, the relationship between the vehicle-mounted power receiving antenna and a parking space-side power transmission antenna is not always of the best transmission efficiency position (or the position where a maximum coupling coefficient between the power transmission antenna and the power receiving antenna is achieved; or, for example, if the power transmission antenna and the power receiving antenna are in the same shape and equal in size, the position is where a positional change in front-back and left-right directions is zero) . That is, the electric power transmission system of the prior art is just set to an intermediate frequency. That frequency is not necessarily a frequency that yields maximum efficiency based on a coupling coefficient (a positional change between the antennas) between the current power transmission antenna and power receiving antenna. In this case, the problem is that the transmission of electric power cannot be performed efficiently.

### Means for Solving the Problems

To solve the above problem, according to the invention of claim 1, an electric power transmission system is characterized by including: an inverter unit that converts DC voltage to AC voltage of a predetermined frequency to output; a power transmission antenna to which AC voltage is input from the inverter unit; a control unit that controls a voltage value of DC voltage input to the inverter unit, and a frequency of AC voltage output by the inverter unit; and a power receiving antenna that faces the power transmission antenna and is for transmission of electric energy from the power transmission antenna via electromagnetic fields, wherein, based on current flowing through the inverter unit, a coupling coefficient between the power transmission antenna and the power receiving antenna is calculated.

According to the invention of claim 2, the electric power transmission system of claim 1 is characterized by including a table in which a relationship between current flowing through the inverter unit and a coupling coefficient between the power transmission antenna and the power receiving antenna is stored, wherein the control unit inputs DC voltage of a specific voltage value to the inverter unit, and drives the inverter unit at a specific frequency, and measures the current flowing through the inverter unit, and calculates, from the measured current and the table, the coupling coefficient between the power transmission antenna and the power receiving antenna.

According to the invention of claim 3, the electric power transmission system of claim 2 is characterized in that, as the specific frequency, a frequency between a frequency that yields maximum transmission efficiency between the power transmission antenna and the power receiving antenna and a frequency that yields minimum transmission efficiency is selected.

According to the invention of claim 4, an electric power transmission system is characterized by including: an inverter unit that converts DC voltage to AC voltage of a predetermined frequency to output; a power transmission antenna to which AC voltage is input from the inverter unit; a control unit that controls a current value of DC voltage input to the inverter unit, and a frequency of AC voltage output by the inverter unit; and a power receiving antenna that faces the power transmission antenna and is for transmission of electric energy from the power transmission antenna via electromagnetic fields, wherein, based on voltage of current flowing through the inverter unit, a coupling coefficient between the power transmission antenna and the power receiving antenna is calculated.

According to the invention of claim 5, the electric power transmission system of claim 4 is characterized by including a table in which a relationship between a voltage value of DC voltage input to the inverter unit and a coupling coefficient between the power transmission antenna and the power receiving antenna is stored, wherein the control unit inputs DC voltage of a specific current value to the inverter unit, and drives the inverter unit at a specific frequency, and measures voltage of current flowing through the inverter unit, and calculates, from the measured voltage and the table, the coupling coefficient between the power transmission antenna and the power receiving antenna.

According to the invention of claim 6, an electric power transmission system is characterized by including: an inverter unit that converts DC voltage to AC voltage of a predetermined frequency to output; a power transmission antenna to which AC voltage is input from the inverter unit; a control unit that controls voltage and current values of DC voltage input to the inverter unit, and a frequency of AC voltage output by the inverter unit; a power receiving antenna that faces the power transmission antenna and is for transmission of electric energy from the power transmission antenna via electromagnetic fields; and a table in which a relationship between a drive frequency of the inverter unit and a coupling coefficient between the power transmission antenna and the power receiving antenna is stored, wherein, based on the drive frequency of the inverter unit, a coupling coefficient between the power transmission antenna and the power receiving antenna is calculated.

According to the invention of claim 7, the electric power transmission system of claim 6 is characterized by including a table in which a relationship between a drive frequency of the inverter unit and a coupling coefficient between the power transmission antenna and the power receiving antenna is stored, wherein the control unit acquires the drive frequency of the inverter unit when inputting DC voltage of specific voltage and current values to the inverter unit, and calculates, from the acquired frequency and the table, the coupling coefficient between the power transmission antenna and the power receiving antenna.

### Advantages of the Invention

In the electric power transmission system of the present invention, the control unit uses a specific frequency to drive the inverter unit, and measures the current flowing through the inverter unit, and calculates the coupling coefficient between the power transmission antenna and the power receiving antenna based on the measured current and the table. Therefore, the electric power transmission system of the present invention can properly recognize the positional change between the power transmission antenna and the power receiving antenna based on the coupling coefficient, and thereby efficiently carry out the transmission of electric power.

### Brief Description of the Drawings

FIG. 1 is a block diagram of an electric power transmission system according to an embodiment of the present invention.
FIG. 2 is a diagram illustrating definitions of positional relationship between a power transmission antenna and a power receiving antenna in an electric power transmission system according to an embodiment of the present invention.
FIG. 3 is a diagram showing an inverter unit of an electric power transmission system of an embodiment of the present invention.
FIG. 4 is an exploded perspective view of a power receiving antenna 210 used in an electric power transmission system according to an embodiment of the present invention.
FIG. 5 is a schematic cross-sectional view illustrating how power is transmitted between antennas in power transmission of an embodiment of the present invention.
FIG. 6 is a diagram showing the relationship between frequency and power transmission efficiency.
FIG. 7 is a schematic diagram showing the state of current and electric fields at a first extreme-value frequency.
FIG. 8 is a schematic diagram showing the state of current and electric fields at a second extreme-value frequency.
FIG. 9 is a diagram showing characteristics at an extreme-value frequency (first frequency) at which a magnetic wall emerges, among the extreme-value frequencies that give two extreme values.
FIG. 10 is a diagram showing characteristics at an extreme-value frequency (second frequency) at which an electric wall emerges, among the extreme-value frequencies that give two extreme values.
FIG. 11 is a diagram showing a flowchart of a coupling coefficient calculation/frequency determination process in an electric power transmission system according to an embodiment of the present invention.
FIG. 12 is a diagram illustrating a coupling coefficient detection frequency in an electric power transmission system according to an embodiment of the present invention.
FIG. 13 is a diagram showing one example of a data table in which the relationship between current flowing through an inverter unit 130 and a coupling coefficient between a power transmission antenna 140 and a power receiving antenna 210 is stored.
FIG. 14 is a diagram showing one example of a data table in which the relationship between a coupling coefficient between a power transmission antenna 140 and a power receiving antenna 210 and a transmission frequency is stored.
FIG. 15 is a diagram showing a flowchart of an electric power transmission process in an electric power transmission system according to an embodiment of the present invention.

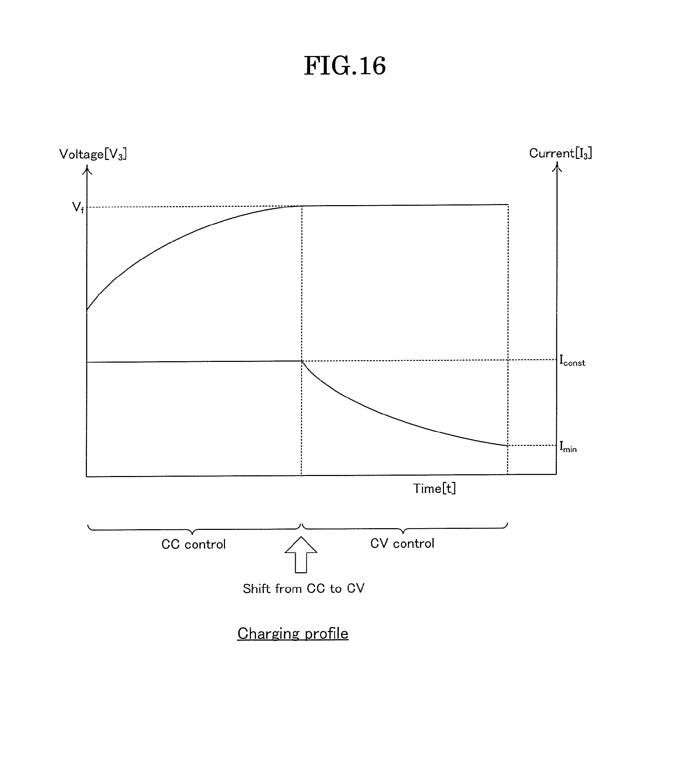

FIG. 16 is a diagram showing a charging profile of a battery in an electric power transmission system according to an embodiment of the present invention.
FIG. 17 is a diagram showing one example of a data table in which the relationship between a coupling coefficient between a power transmission antenna 140 and a power receiving antenna 210 and a transmission frequency is stored.
FIG. 18 is a diagram of an image of a set (V₁, I₁, f) when a coupling coefficient between antennas is changed.
FIG. 19 is a diagram showing an example of a table used in an electric power transmission system according to an embodiment of the present invention.

### Modes for Carrying Out the Invention

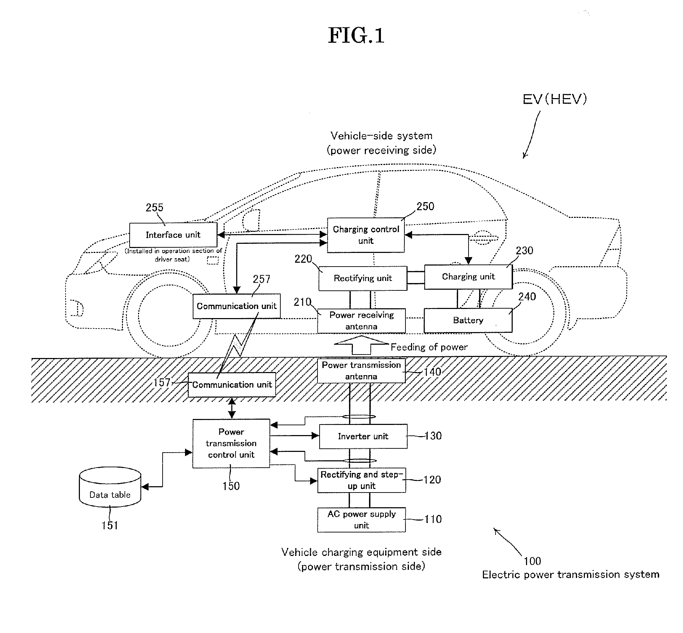

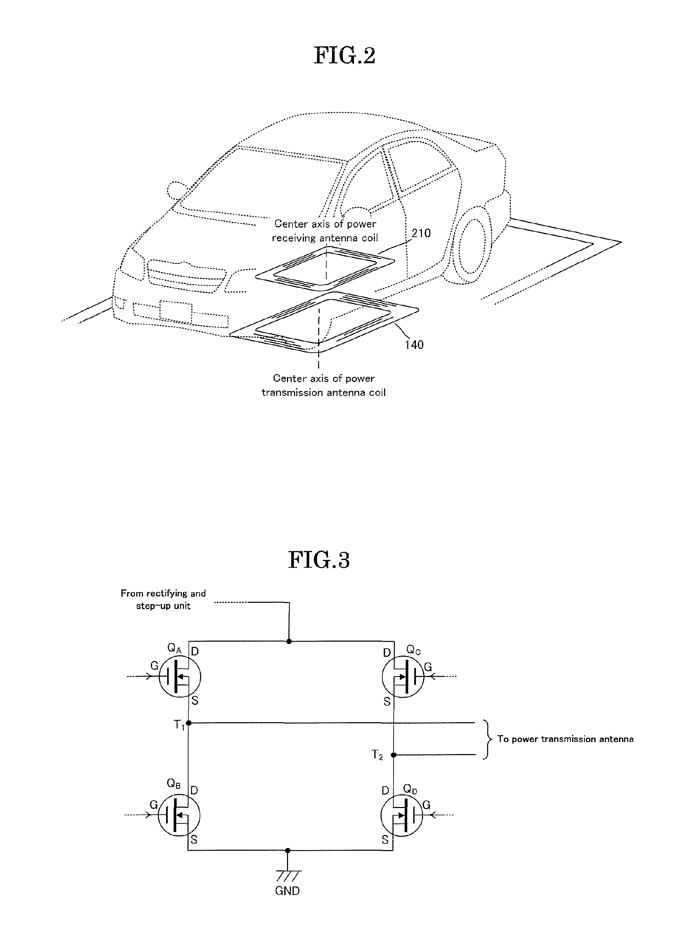

Hereinafter, an embodiment of the present invention will be described with reference to the accompanying drawings. FIG. 1 is a block diagram of an electric power transmission system according to an embodiment of the present invention. FIG. 2 is a schematic diagram showing an example in which an electric power transmission system 100 of the embodiment of the present invention is mounted on a vehicle. The electric power transmission system 100 of the present invention is suitably used in a system that charges vehicle-mounted batteries, such as those of an electric vehicle (EV) or a hybrid electric vehicle (HEV), for example. For that purpose, on a bottom portion of a vehicle, a power receiving antenna 210 is placed to make it possible to receive electric power.

In the electric power transmission system 100 of the present embodiment, electric power is transmitted to the above vehicle in a non-contact manner. The power transmission system 100 is therefore provided in a parking space where the vehicle can be stopped. In the parking space, which is a vehicle-charging space, a power transmission antenna 140 and other components of the electric power transmission system 100 of the present embodiment are buried under the ground. A user of the vehicle parks the vehicle in the parking space in which the electric power transmission system of the present embodiment is provided. Electric energy (electric power) is transmitted from the power transmission antenna 140 to the power receiving antenna 210, which is mounted on the vehicle, via electromagnetic fields.

When the vehicle is parked in the parking space, the relationship between the vehicle-mounted power receiving antenna 210 and the power transmission antenna 140 is not always of the best transmission efficiency position (or the position where a maximum coupling coefficient between the power transmission antenna and the power receiving antenna is achieved; or, for example, if the power transmission antenna and the power receiving antenna are in the same shape and equal in size, the position is where a positional change in front-back and left-right directions is zero) . Therefore, the electric power transmission system 100 of the present embodiment is configured in such a way as to recognize the positional relationship between the power receiving antenna 210 and the power transmission antenna 140 and then choose an optimum frequency for carrying out the electric power transmission system 100 with maximum power transmission efficiency.

FIG. 2 is a diagram illustrating definitions of positional relationship between the power transmission antenna 140 and the power receiving antenna 210 in the electric power transmission system according to the embodiment of the present invention. Both the power transmission antenna 140 and the power receiving antenna 210 are a substantially rectangular coil that is wound in a spiral shape. Under restriction, which means the power receiving antenna 210 is mounted on the vehicle, the relative position of the power transmission antenna 140 to the power receiving antenna 210 where a coupling coefficient between the power transmission antenna 140 and the power receiving antenna 210 is maximized is defined as an optimum relative position. In this case, a positional change between the power transmission antenna 140 and the power receiving antenna 210 can be defined as a deviation from the optimum relative position. As the positional change between the antennas relative to the optimum relative position becomes larger, the coupling coefficient becomes smaller.

If the power transmission antenna 140 and the power receiving antenna 210 are equal in size and in the same shape, the coupling coefficient can be indirectly calculated by calculating the positional change between the antennas relative to the optimum relative position without calculating the coupling coefficient as an actual value. If the power transmission antenna 140 and the power receiving antenna 210 are different in size and in different shapes, the coupling coefficient can be indirectly calculated by calculating the positional change without calculating the coupling coefficient as an actual value in such cases as when the relationship between the positional change relative to the optimum relative position and the coupling coefficient is stored in advance for that size and shape.

In vehicle charging equipment (power transmission side), a rectifying and step-up unit 120 includes a converter that converts AC voltage from an AC power supply unit 110, such as commercial power supply, into a constant level of DC voltage; the rectifying and step-up unit 120 then steps up an output of the converter to a predetermined level of voltage. The settings of a voltage generated by the rectifying and step-up unit 120 can be controlled by a power transmission control unit 150.

An inverter unit 130 generates, from the DC voltage supplied from the rectifying and step-up unit 120, a predetermined level of AC voltage to input to the power transmission antenna 140. FIG. 3 is a diagram showing the inverter unit of the electric power transmission system according to the embodiment of the present invention. As shown in FIG. 3, for example, the inverter unit 130 includes four field-effect transistors (FET) Q_{A} to Q_{D}, which are connected in full-bridge configuration.

According to the present embodiment, between a connection portion T1, which is located between the switching elements Q_{A} and Q_{B} connected in series, and a connection portion T2, which is located between the switching elements Q_{C} and Q_{D} connected in series, the power transmission antenna 140 is connected. When the switching elements Q_{A} and Q_{D} are ON, the switching elements Q_{B} and Q_{C} are OFF. When the witching elements Q_{B} and Q_{C} are ON, the switching elements Q_{A} and Q_{D} are OFF. As a result, a rectangular wave of AC voltage is generated between the connection portions T1 and T2.

To the switching elements Q_{A} to Q_{D} that make up the above inverter unit 130, a drive signal is input from the power transmission control unit 150. Moreover, the frequency for driving the inverter unit 130 can be controlled from the power transmission control unit 150.

The output of the above inverter unit 130 is supplied to the power transmission antenna 140. The power transmission antenna 140 includes a coil having an inductance component (described later), and resonates with the vehicle-mounted power receiving antenna 210, which is disposed in such a way as to face the power transmission antenna 140. In this manner, electric energy output from the power transmission antenna 140 can be transmitted to the power receiving antenna 210.

Incidentally, when the output of the inverter unit 130 is input to the power transmission antenna 140, impedance matching may be carried out by a matching unit, which is not shown in the diagrams. The matching unit may include a passive element having a predetermined circuit constant.

In the electric power transmission system according to the embodiment of the present invention, when power is efficiently transmitted from the power transmission-side power transmission antenna 140 of the electric power transmission system 100 to the power receiving-side power receiving antenna 210, a resonance frequency of the power transmission antenna 140 becomes equal to a resonance frequency of the power receiving antenna 210. Therefore, from the power transmission antenna to the power receiving antenna, energy is efficiently transmitted.

Voltage V₁ and current I₁, which are input to the inverter unit 130, and voltage V₂ and current I₂, which are output from the inverter unit 130, are measured by the power transmission control unit 150. The power transmission control unit 150 can acquire input power (W₁ = V₁×I₁), which is input to the inverter unit 130, and output power (W₂ = V₂×I₂), which is output from the inverter unit 130, from the measured voltage V₁ and current I₁ and the measured voltage V₂ and current I₂. The power transmission control unit 150 uses the measured values to control the voltage value of DC voltage and current value input to the inverter unit 130.

The power transmission control unit 150 includes a general-purpose information processing unit that includes a CPU, a ROM, which keeps programs that run on the CPU, a RAM, which serves as a work area for the CPU, and the like. The power transmission control unit 150 can calculate the efficiency (W₁/W₂) of the inverter unit 130 from the acquired input power (W₁) and output power (W₂), and the like.

A data table 151 of the power transmission control unit 150 includes a first table, in which the relationship between the current flowing through the inverter unit 130 and a coupling efficient between the power transmission antenna 140 and the power receiving antenna 210 (which is inversely proportional to the positional change between the antennas) is stored; and a second table, in which the relationship between the positional change between the power transmission antenna 140 and the power receiving antenna 210 and a transmission frequency is stored. The power transmission control unit 150 references a measured value that is input and the tables before carrying out control during the transmission of electric power.

The power transmission control unit 150 carries out actual transmission of charging power by controlling the voltage of DC voltage output by the rectifying and step-up unit 120 and the frequency of AC voltage output by the inverter unit 130.

A communication unit 157 wirelessly communicates with a vehicle-side communication unit 257 so the transmitting and receiving of data is possible between the power transmission side and the vehicle. The data received by the communication unit 157 is transferred to the power transmission control unit 150. The power transmission control unit 150 is able to transmit predetermined information to the vehicle side via the communication unit 157.

The configuration of the electric power transmission system 100 provided on the vehicle side will be described. In the vehicle's power receiving-side system, the power receiving antenna 210 is designed to resonate with the power transmission antenna 140 to receive electric energy output from the power transmission antenna 140.

The AC power received by the power receiving antenna 210 is rectified by a rectifying unit 220. The rectified power is accumulated in a battery 240 through a charging unit 230. The charging unit 230 controls a process of charging the battery 240 on the basis of a command from a charging control unit 250. Incidentally, in the present embodiment, the battery 240 is used as a load of the power receiving-side system, and an example of charging the battery is explained. However, another load may be used as the load of the power receiving-side system.

Voltage V₃ and current I₃, which are input to the battery 240 from the charging unit 230, are measured by the charging control unit 250. Based on the measured voltage V₃ and current I₃, the charging control unit 250 controls the charging unit 230, and thereby controls the process of charging the battery 240 in such a way as to follow an appropriate charging profile of the battery 240. The charging unit 230 is able to select one of modes, i.e., constant current, constant output, or constant voltage, to charge the battery 240.

The charging control unit 250 includes a general-purpose information processing unit that includes a CPU, a ROM, which keeps programs that run on the CPU, a RAM, which serves as a work area for the CPU, and the like. The charging control unit 250 works cooperatively with each of components connected to the charging control unit 250 shown in the diagrams.

In the charging control unit 250, the charging profile of the battery 240 is stored, and algorithm for letting the charging control unit 250 operate in accordance with the profile is stored, too.

The communication unit 257 wirelessly communicates with the communication unit 157 of the power transmission side so the transmitting and receiving of data is possible between the power transmission-side system and the vehicle-side system. The data received by the communication unit 257 is transferred to the charging control unit 250. The charging control unit 250 is able to transmit predetermined data (e.g., data about voltage V₃ and current I₃ and the like) to the power transmission side via the communication unit 257.

An interface unit 230 is provided in a driver seat portion of the vehicle. The interface unit 230 provides predetermined information and the like to a user (driver), or accepts a user's operation or input. The interface unit 230 includes a display device, buttons, a touch panel, a speaker, and the like. After a predetermined operation is performed by a user, operation data is transmitted from the interface unit 230 to the charging control unit 250, which then processes the operation data. To present predetermined information to a user, from the charging control unit 250 to the interface unit 230, display instruction data is transmitted to display the predetermined information.

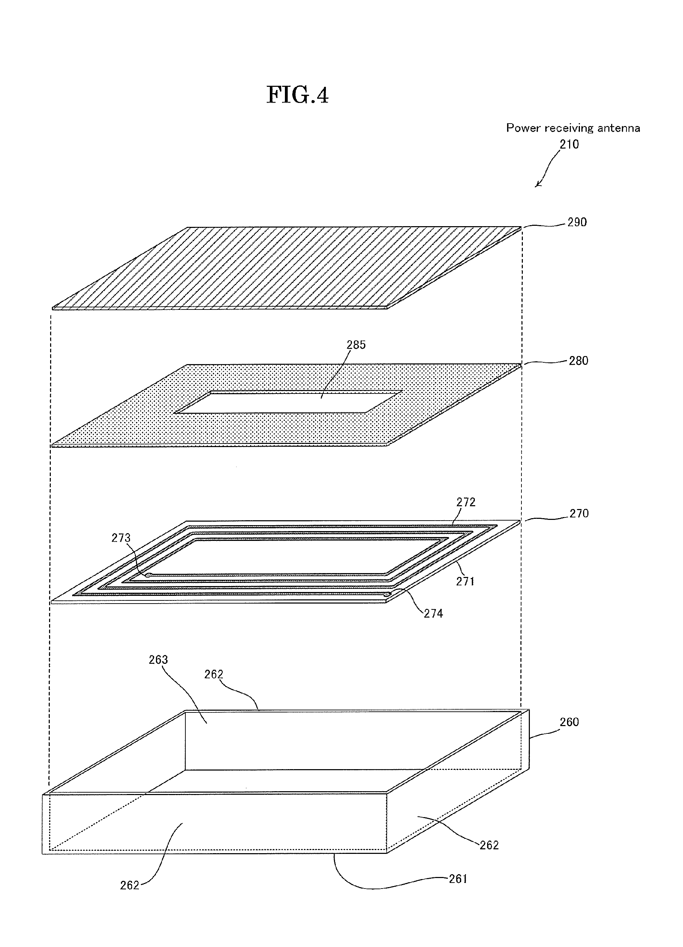

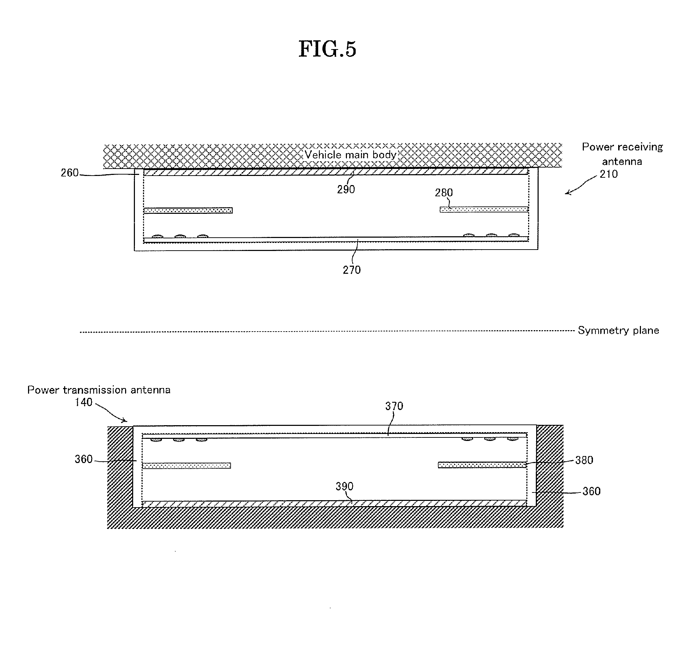

FIG. 4 is an exploded perspective view of the power receiving antenna 210 used in the electric power transmission system according to the embodiment of the present invention. FIG. 5 is a schematic cross-sectional view illustrating how power is transmitted between the antennas in power transmission of the embodiment of the present invention. Incidentally, in the embodiment described below, as a coil body 270, an example of a coil that is in the shape of a rectangular flat plate will be described. However, the antennas of the present invention are not limited to a coil of such a shape. For example, a coil body 270 that is in the shape of a circular flat plate or the like may also be available. Such a coil body 270 functions as a magnetic resonance antenna section of the power receiving antenna 210. The "magnetic resonance antenna section" includes not only an inductance component of the coil body 270 but also a capacitance component based on floating capacitance thereof or a capacitance component based on a capacitor that is intentionally added.

A coil case 260 is used to house the coil body 270, which includes an inductance component of the power receiving antenna 210. The coil case 260 is made of, for example, resin such as polycarbonate, and is in the shape of a box with an opening. From each side of a rectangular bottom plate section 261 of the coil case 260, a side plate section 262 is provided in such a way as to extend in a direction perpendicular to the bottom plate section 261. On an upper side of the coil case 260, an upper opening 263 is formed in such a way as to be surrounded by the side plate sections 262. The power receiving antenna 210 packaged in the coil case 260 is mounted on a vehicle's main body section at the upper opening 263's side. In order to attach the coil case 260 to the vehicle's main body section, any conventional, well-known method may be used. Incidentally, in order to make an improvement in the attachment of the coil case 260 to the vehicle's main body section, a flange member or the like may be provided around the upper opening 263.

The coil body 270 includes a base 271, which is made of glass epoxy and is in the shape of a rectangular flat plate, and a conductive section 272, which is formed on the base 271 and is in a spiral shape. To an inner peripheral-side first end portion 273 and outer peripheral-side second end portion 274 of the spirally shaped conductive section 272, conductive lines (not shown) are electrically connected. Therefore, the electric power received by the power receiving antenna 210 can be introduced to the rectifying section 202. The coil body 270 is placed on the rectangular bottom plate section 261 of the coil case 260, and is fixed to the bottom plate section 261 through a suitable fixing means.

A magnetic shield body 280 is a plate-like magnetic member having a hollow section 285. It is desirable that the magnetic shield body 280 be made of a material that is large in specific resistance and magnetic permeability and small in magnetic hysteresis; for example, magnetic material such as ferrite may be used. The magnetic shield body 280 is fixed to the coil case 260 through an appropriate means in such a way as to be disposed with some space above the coil body 270. Such a layout helps to increase the rate at which lines of magnetic force generated on the power transmission antenna 140's side are transmitted through the magnetic shield body 280, thereby reducing the impact of metal objects making up the vehicle's main body section on the lines of magnetic force during the transmission of electric power from the power transmission antenna 140 to the power receiving antenna 210.

As for the upper opening 263 of the coil case 260, a metal body lid 290 that is in the shape of a rectangular flat plate is placed a predetermined distance above the shield body 280 in such a way as to cover the upper opening 263. For the metal body lid 290, any metal material may be used. According to the present embodiment, aluminum is used, for example.

As described above, in the power receiving antenna 210 of the present invention, the magnetic shield body 280 is provided above the coil body 270. Therefore, even when the power receiving antenna 210 is mounted on the vehicle's bottom surface, the effects of metal objects and other components making up the vehicle's main body section are reduced, and the transmission of electric power can be performed efficiently.

The above-described configuration of the power receiving antenna 210 is also applied to the power transmission antenna of the electric power transmission system 100. In this case, as shown in FIG. 5, the power transmission antenna 140 is so formed as to have plane symmetry (mirror symmetry) with the power receiving antenna 210 with respect to a horizontal plane.

In the power transmission antenna 140, as in the case of the power receiving side, a coil body 370 is disposed in a coil case 360, and a magnetic shield body 380 is provided a predetermined distance away from the coil body 370, and the coil case 160 is sealed with a metal body lid 390.

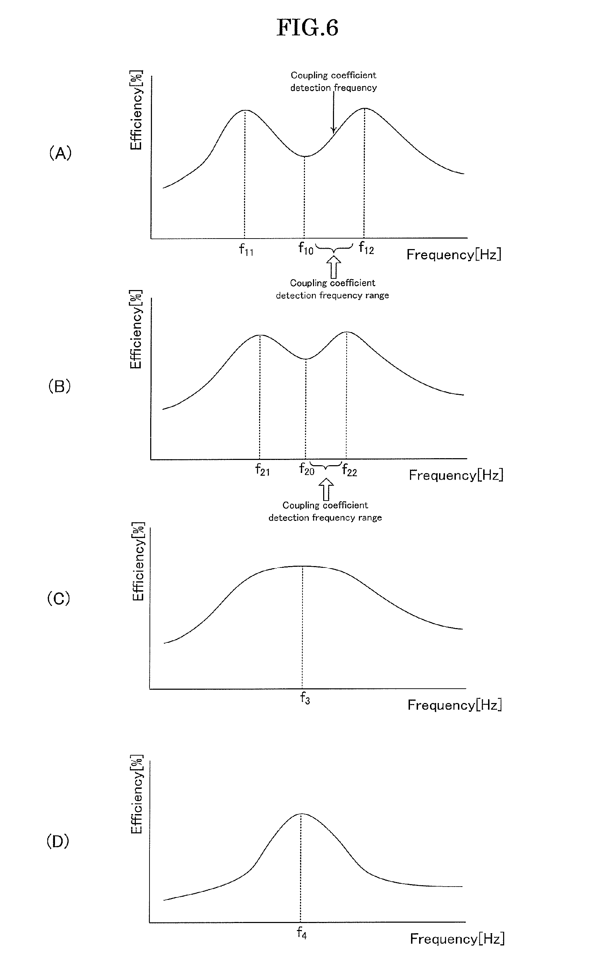

The following describes frequency dependence of power transmission efficiency based on the positional relationship between the power receiving antenna 210 and power transmission antenna 140 of the electric power transmission system 100 of the present embodiment that has the above-described configuration. FIG. 6 is a diagram showing the relationship between frequency and power transmission efficiency in the electric power transmission system of the present embodiment.

FIG. 6A shows frequency characteristics of power transmission efficiency corresponding to a situation where the power receiving antenna 210 and the power transmission antenna 140 are optimally disposed (or a situation where the positional change is zero with the highest coupling coefficient). As shown in FIG. 6A, there are two frequencies that give two maximum values. Furthermore, there is one frequency that gives a minimum value therebetween. The extreme-value frequency that gives a maximum value of a lower frequency is defined as a first extreme-value frequency, and the extreme-value frequency that gives a maximum value of a higher frequency is defined as a second extreme-value frequency.

The positional change between the power receiving antenna 210 and the power transmission antenna 140 becomes larger from FIG. 6A, FIG. 6B and FIG. 6C and then to FIG. 6D; what is shown in the diagrams is frequency characteristics of power transmission efficiency during this process.

As shown in FIGS. 6C and 6D, if there is one frequency that gives an extreme value of transmission efficiency, electric power can be transmitted with high transmission efficiency when the frequency of this extreme value is selected. If there are two frequencies, i.e., the first and second extreme-value frequencies, that give extreme values as shown in FIGS. 6A and 6B, an extreme-value frequency at which an electric wall emerges at a symmetry plane between the power transmission antenna 140 and the power receiving antenna 210 is selected in the case of the present embodiment.

The concepts of electric and magnetic walls that emerge at a symmetry plane between the power transmission antenna 140 and the power receiving antenna 210 will be described.

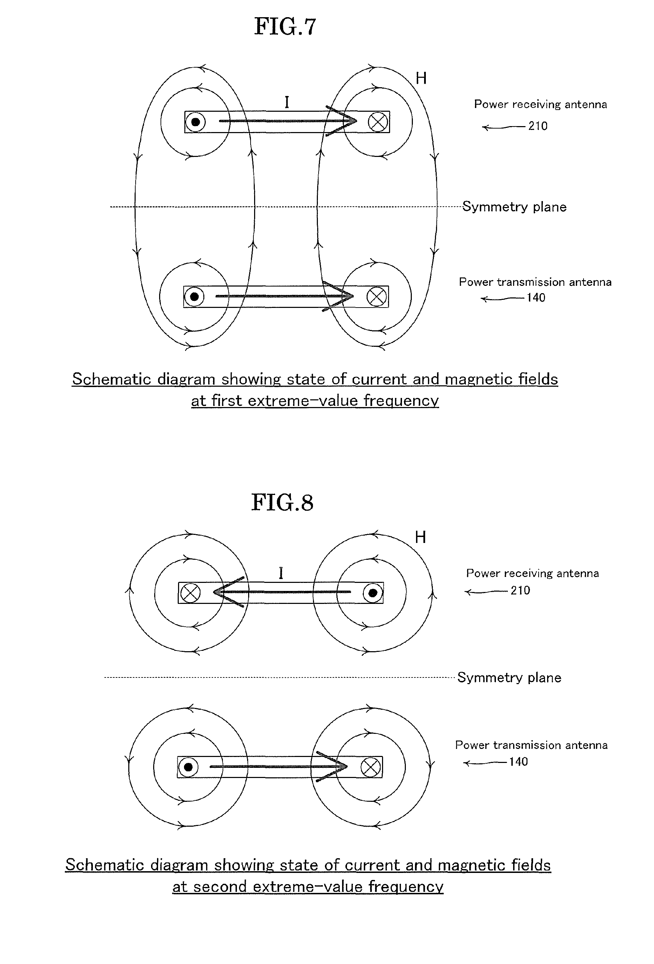

FIG. 7 is a schematic diagram showing the state of current and electric fields at a first extreme-value frequency. At the first extreme-value frequency, the phase of current flowing through the power transmission antenna 140 is substantially equal to the phase of current flowing through the power receiving antenna 210. The vectors of magnetic fields are aligned at around a middle point of the power transmission antenna 140 and of the power receiving antenna 210. This state is regarded as generating a magnetic wall whose magnetic field is perpendicular to a symmetry plane located between the power transmission antenna 140 and the power receiving antenna 210.

FIG. 8 is a schematic diagram showing the state of current and electric fields at a second extreme-value frequency. At the second extreme-value frequency, the phase of current flowing through the power transmission antenna 140 is substantially opposite to the phase of current flowing through the power receiving antenna 210. The vectors of magnetic fields are aligned at around the symmetry plane of the power transmission antenna 140 and of the power receiving antenna 210. This state is regarded as generating an electric wall whose magnetic field is horizontal to the symmetry plane located between the power transmission antenna 140 and the power receiving antenna 210.

As for the concept of the electric and magnetic walls and other things described above, what is described in the following documents and the like is adopted herein: Takehiro Imura, Youich Hori, "Transmission technology with electromagnetic field resonant coupling", IEEJ Journal, Vol.129, No.7, 2009, and Takehiro Imura, Hiroyuki Okabe, Toshiyuki Uchida, Youich Hori, "Research on magnetic field coupling and electric field coupling of non-contact power transmission in terms of equivalent circuits", IEEJ Trans.IA, Vol.130, No.1, 2010.

In the case of the present invention, the following describes the reason why an extreme-value frequency at which an electric wall is generated at a symmetry plane between the power transmission antenna 140 and the power receiving antenna 210 is selected when there are two frequencies, i.e., the first and second extreme-value frequencies, as frequencies giving extreme-values.

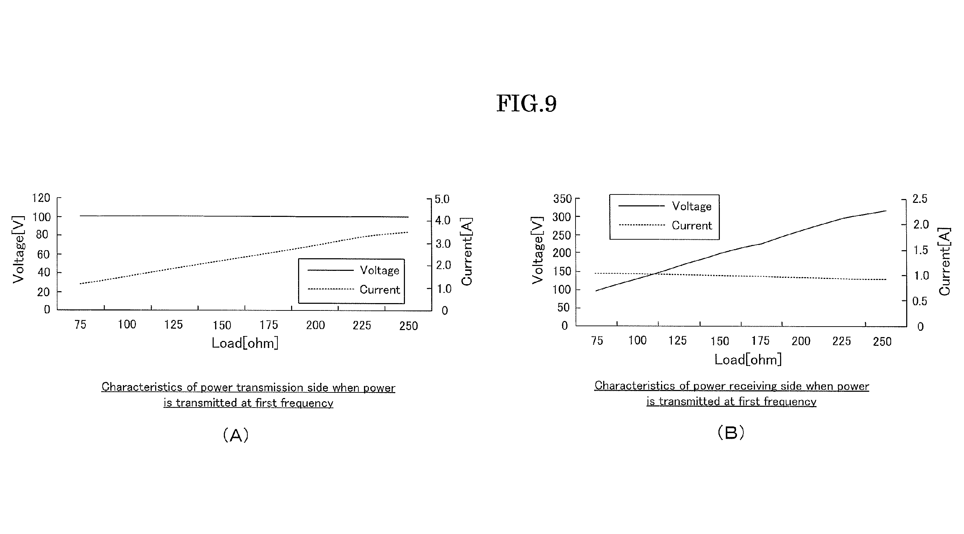

FIG. 9 is a diagram showing characteristics at an extreme-value frequency (first extreme-value frequency) at which a magnetic wall emerges, among the extreme-value frequencies that give two extreme values. FIG. 9A is a diagram showing how voltage (V₁) and current (I₁) vary at the power transmission side when a change or variation of the load of the battery 240 (load) occurs. FIG. 9B is a diagram showing how voltage (V₃) and current (I₃) vary at the power receiving side when a change or variation of the load of the battery 240 (load) occurs. According to the characteristics shown in FIG. 9, as the load of the battery 240 (load) at the power receiving side increases, the voltage rises.

At the above-described frequency at which the magnetic wall emerges, when seen from the battery 240's side, the power receiving antenna 210 seems like a constant current source. At the frequency at which the power receiving antenna 210 works like a constant current source, if an emergency stop occurs due to trouble of the battery 240 or the like at the load side when the transmission of power is performed, the voltages of both end portions of the power receiving antenna 210 will rise.

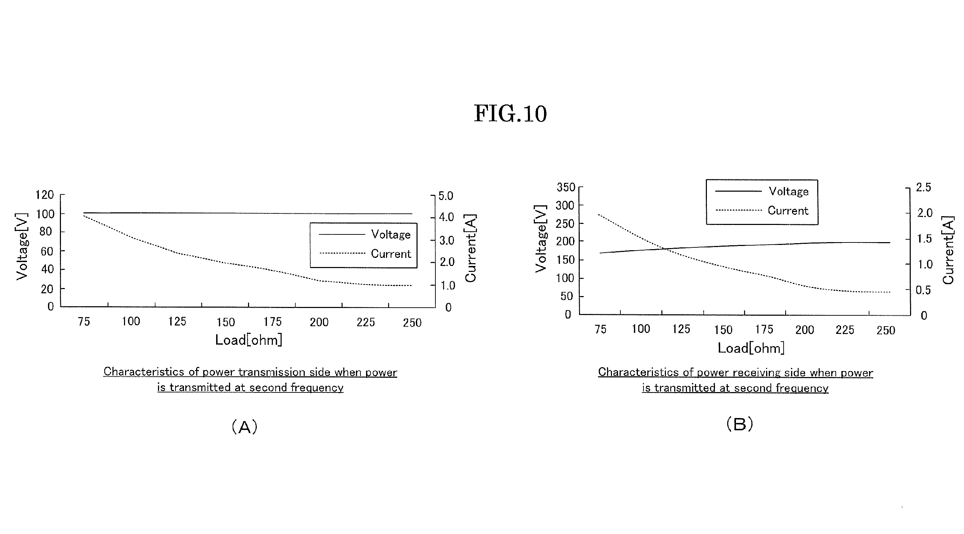

FIG. 10 is a diagram showing characteristics at an extreme-value frequency (second extreme-value frequency) at which an electric wall emerges, among the extreme-value frequencies that give two extreme values. FIG. 10A is a diagram showing how voltage (V₁) and current (I₁) vary at the power transmission side when a change or variation of the load of the battery 240 (load) occurs. FIG. 10B is a diagram showing how voltage (V₃) and current (I₃) vary at the power receiving side when a change or variation of the load of the battery 240 (load) occurs. According to the characteristics shown in FIG. 10, as the load of the battery 240 (load) at the power receiving side increases, the current decreases.

At the above-described frequency at which the electric wall emerges, when seen from the battery 240's side, the power receiving antenna 210 seems like a constant voltage source. At the frequency at which the power receiving antenna 210 works like a constant voltage source, if an emergency stop occurs due to trouble of the battery 240 or the like at the load side when the transmission of power is performed, the voltages of both end portions of the power receiving antenna 210 will not rise. Therefore, in the electric power transmission system of the present invention, the voltage does not rise to a high level when the load plunges; the transmission of electric power can be performed in a stable manner.

According to the characteristics of FIG. 9, to the power receiving-side battery 240 (load), the charging circuit seems like a current source. According to the characteristics of FIG. 10, to the power receiving-side battery 240 (load), the charging circuit seems like a voltage source. As the load increases, the characteristics of FIG. 10 are more preferred for the battery 240 (load) because the current decreases. Therefore, according to the present embodiment, when there are two frequencies, i.e., the first and second extreme-value frequencies, an extreme-value frequency at which an electric wall emerges at the symmetry plane between the power transmission antenna 140 and the power receiving antenna 210 is selected.

Even when there are two frequencies that give extreme values of transmission efficiency, the above electric power transmission system of the present invention can quickly determine an optimum frequency for the transmission of electric power, and therefore can perform the transmission of electric power efficiently and in a short time.

If there are two frequencies that give two extreme values, and if an extreme-value frequency at which an electric wall emerges at the symmetry plane between the power transmission antenna 140 and the power receiving antenna 210 is selected, to the battery 240 (load), the charging circuit seems like a voltage source. Therefore, the advantage is that, as the output to the battery 240 changes due to charging control, the output of the inverter unit 130 rises or falls accordingly, and therefore it is easy to handle. Moreover, when an emergency shutdown of the charging unit 230 occurs, the power to be supplied is automatically minimized. Therefore, there is no need for additional equipment.

If there are two frequencies that give two extreme values, and if an extreme-value frequency at which an electric wall emerges at the symmetry plane between the power transmission antenna 140 and the power receiving antenna 210 is selected, to the charging unit 230, the rectifying unit 220 seems like a voltage source. Therefore, the advantage is that, as the output to the battery 240 changes due to charging control, the output of the rectifying and step-up unit 120 rises or falls accordingly, and therefore it is easy to handle. Moreover, when an emergency shutdown of the charging unit 230 occurs, the power to be supplied is automatically minimized. Therefore, there is no need for additional equipment.

If there are two frequencies that give two extreme values, and if an extreme-value frequency at which a magnetic wall emerges at the symmetry plane between the power transmission antenna 140 and the power receiving antenna 210 is selected, it is necessary to control the supplied power when the output is lowered by the charging unit 230. In this case, a communication means and a detection means are required, leading to an increase in cost.

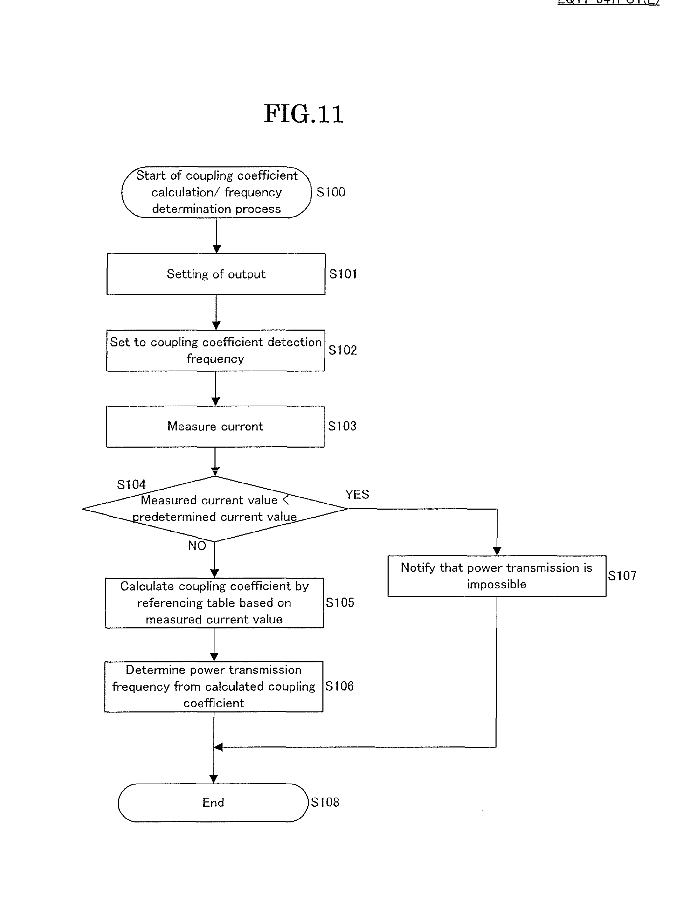

The following describes, in more detail, a process of determining the frequency at the time of power transmission in the electric power transmission system 100 of the present embodiment that has the above-described configuration. FIG. 11 is a diagram showing a flowchart of a coupling coefficient calculation/ frequency determination process in the electric power transmission system according to the embodiment of the present invention.

At step S100, the coupling coefficient calculation/ frequency determination process starts. At step S101, the power transmission control unit 150 sets the rectifying and step-up unit 120 in such a way that a predetermined output value (e.g., 1.5 kW) is output.

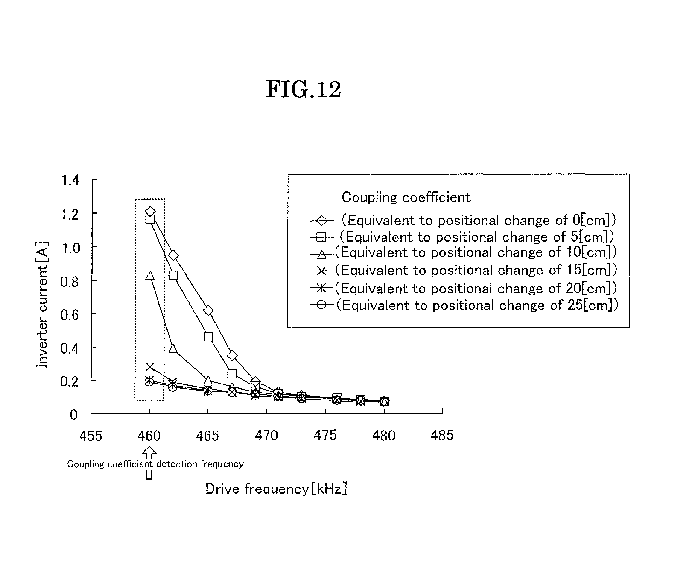

At step S102, a drive frequency of the inverter unit 130 is set to a coupling coefficient detection frequency. Here, the coupling coefficient detection frequency will be described. FIG. 12 is a diagram illustrating the coupling coefficient detection frequency in the electric power transmission system 100 according to the embodiment of the present invention.

In the graph of FIG. 12, the horizontal axis represents the drive frequency of the inverter unit 130, and the vertical axis represents current I₁, which is input to the inverter unit 130. As for the drive frequency, 480 kHz is a frequency (See FIG. 6A) near the second extreme-value frequency, and 460 kHz is near an intermediate frequency (See FIG. 6A) between a frequency that gives a minimum value of efficiency and the frequency of the second extreme-value frequency. In the electric power transmission system 100 of the present embodiment, as the coupling coefficient detection frequency, the latter frequency (460 kHz), or a frequency between the frequency with maximum transmission efficiency between the power transmission antenna 140 and the power receiving antenna 210 and the frequency with minimum transmission efficiency, is selected.

The fact that the value of the current I₁ in the inverter unit 130 is sensitive to the positional change (which is proportional to the inverse of the coupling coefficient) between the power transmission antenna 140 and the power receiving antenna 210 is among the reasons why such frequency is selected as the coupling coefficient detection frequency.

At step S103, the current I₁ of the inverter unit 130 is measured. At step S104, a determination is made as to whether or not the following formula is satisfied: "Measured current value (current I₁) < Predetermined current value". In this case, the predetermined current value is a current value at which the positional change (which is proportional to the inverse of the coupling coefficient) cannot be determined. For example, in the example shown in FIG. 12, the predetermined current value may be set to about 0.2 A.

When the determination result at step S104 is YES, the process proceeds to step S107, and a user is notified through the interface unit 230 of the fact that the transmission of electric power is impossible because the positional change (which is proportional to the inverse of the coupling coefficient) is too large.

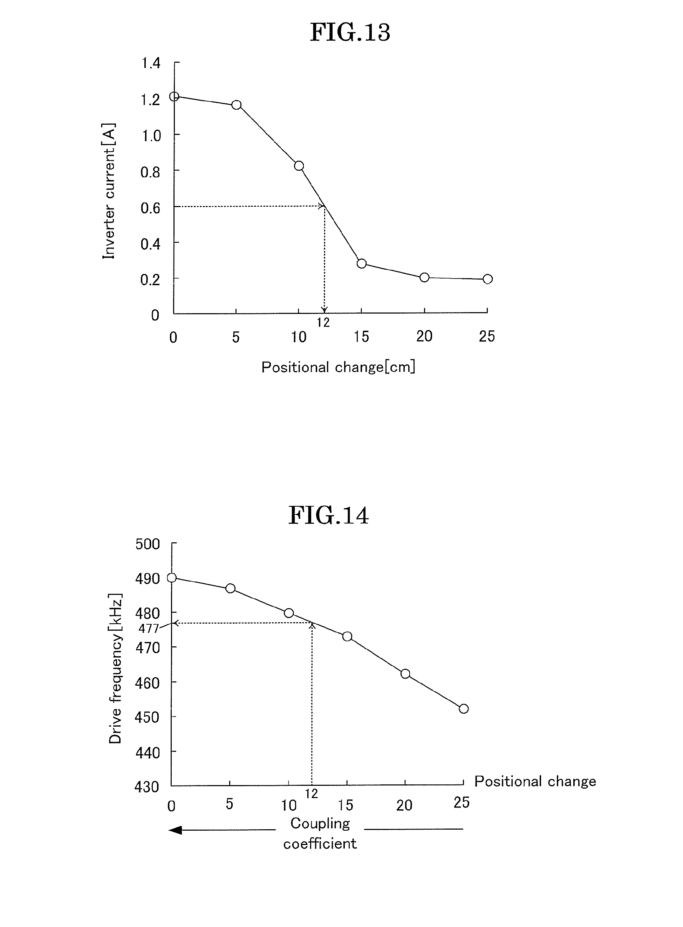

When the determination result at step S104 is NO, the process proceeds to step S105. At step S105, based on the measured current value (current I₁), the coupling coefficient is calculated by referencing the first table in the data table 151. As described above, in the first table, the relationship between the current flowing through the inverter unit 130 and the coupling coefficient between the power transmission antenna 140 and the power receiving antenna 210 is stored. FIG. 13 is a diagram showing one example of the data table. By using the data table of FIG. 13, for example, if the measured current value (current I₁) is 0.6 A, it is possible to calculate a positional change of 12 cm.

At step S106, by referencing the second table in the data table 151, the frequency for carrying out actual transmission of electric power is determined based on the calculated coupling coefficient. As described above, in the second table, the relationship between the coupling coefficient between the power transmission antenna 140 and the power receiving antenna 210 and the transmission frequency is stored. FIG. 14 is a diagram showing one example of the data table. By using the data table of FIG. 14, for example, if the positional change is 12 cm, it is possible to determine a frequency of 477 kHz for carrying out the transmission of electric power. Incidentally, the frequency determined based on FIG. 14 is a frequency that is near the second extreme-value frequency and at which an electric wall emerges; to the battery 240, the power receiving antenna 210 seems like a constant voltage source. At the frequency at which the power receiving antenna 210 works like a constant voltage source, if an emergency stop occurs due to trouble of the battery 240 or the like at the load side when the transmission of power is performed, the voltages of both end portions of the power receiving antenna 210 will not rise. Therefore, in the electric power transmission system of the present invention, the voltage does not rise to a high level when the load plunges; the transmission of electric power can be performed in a stable manner.

At step S108, the flow of the coupling coefficient calculation/ frequency determination process comes to an end.

As described above, in the electric power transmission system of the present invention, the control unit uses a specific frequency to drive the inverter unit 130, and measures the current flowing through the inverter unit 130, and calculates the coupling coefficient between the power transmission antenna 140 and the power receiving antenna 210 based on the measured current and the data table 151. Therefore, the electric power transmission system of the present invention can properly recognize the positional change between the power transmission antenna 140 and the power receiving antenna 210 based on the coupling coefficient, and thereby efficiently carry out the transmission of electric power.

Moreover, in the electric power transmission system of the present invention, the control unit is designed to determine the transmission frequency for transmitting electric energy via electromagnetic fields from the power transmission antenna 140, from the coupling coefficient between the power transmission antenna 140 and the power receiving antenna 210, which is calculated by the calculation unit, and from the data table 151. Therefore, the electric power transmission system of the present invention can properly recognize, from the coupling coefficient, the positional change between the power transmission antenna 140 and the power receiving antenna 210. Thus, the electric power transmission system can select, based on the positional change, an appropriate frequency for the transmission of electric power, and thereby carry out the transmission of electric power efficiently.

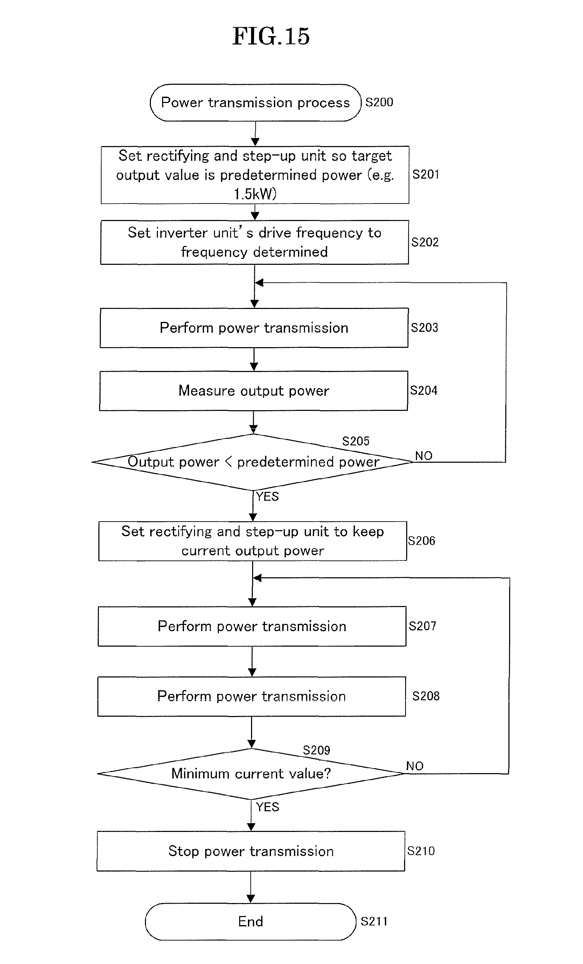

The following describes a process of actually transmitting charging power with an optimum frequency that is determined as described above. FIG. 15 is a diagram showing a flowchart of an electric power transmission process in the electric power transmission system according to the embodiment of the present invention. The flowchart is executed by the power transmission control unit 150.

FIG. 14 is a diagram showing a charging profile of the battery 240. The charging profile is one example of charging profiles for the battery 240. In charging the battery 240, other profiles may be used.

The charging profile shown in FIG. 14 starts to be used when the amount of electricity stored in the battery 240 is almost zero. According to this charging profile, at first, constant current charging (CC control) is carried out to charge the battery 240 with a constant level of current I_{const}. Then, after an end-portion voltage of the battery 240 reaches Vf, constant voltage charging (CV control) is carried out in such a way as to keep a constant level of charging voltage. After the current that flows into the battery 240 reaches Iₘᵢₙ during the constant voltage charging, the charging comes to an end.

The flowchart of the electric power transmission process shown in FIG. 15 is established based on such a charging profile.

At step S200, the electric power transmission process starts. Then, at step S201, the power transmission control unit 150 sets the rectifying and step-up unit 120 in such a way that the target output value becomes, for example. 1.5 kW.

At step S202, the drive frequency of the inverter unit 130 is set to the optimum frequency that is determined during the previous frequency determination process. At step S203, the transmission of electric power is carried out.

At step S204, the output power is measured based on the voltage V₂ and current I₂ that are output from the inverter unit 130.

At step S205, a determination is made as to whether or not the measured output power is smaller than a predetermined power. When the inverter unit 130 is capable of outputting the predetermined power, the power receiving-side charging unit 230 is performing a charging operation with a constant current. At that time, impedance Z_{N} is equal to Z_{CC} when viewed from the power transmission side. After the power receiving side shifts from constant output charging to constant voltage charging, the power receiving-side charging unit 230 starts a charging operation with a constant voltage. As a result, impedance Z_{N} is equal to Z_{CV} when viewed from the power transmission side. If the impedance is changed as described above, the power output from the inverter unit 130 becomes smaller than the predetermined power. Step S205 is intended to detect such a change on the power receiving side.

When the determination result at step S205 is NO, the process enters a return loop to step S203. When the determination result at step S205 is YES, the process proceeds to step S206, and the rectifying and step-up unit 120 is set in such a way that the output voltage to the inverter unit 130 remains unchanged.

At step S207, the transmission of electric power is carried out. At step S208, the charging control unit 250 measures the current I₃ that is input to the battery 240.

At step S209, a determination is made as to whether or not the measured current I₃ becomes minimum current Iₘᵢₙ. When the determination result at step S209 is NO, the process enters a return loop to step S207. When the determination result at step S209 is YES, the process of charging the battery 240 on the power receiving side is estimated to be finished. Therefore, the process proceeds to step S210 to stop the transmission of electric power, and the process ends at step S211.

As described above, in the electric power transmission system of the present invention, the control unit uses a specific frequency to drive the inverter unit, and measures the current flowing through the inverter unit, and calculates the coupling coefficient between the power transmission antenna and the power receiving antenna based on the measured current and the table. Therefore, the electric power transmission system of the present invention can properly recognize the positional change between the power transmission antenna and the power receiving antenna based on the coupling coefficient, and thereby efficiently carry out the transmission of electric power.

Moreover, in the electric power transmission system of the present invention, the control unit is designed to determine the transmission frequency for transmitting electric energy via electromagnetic fields from the power transmission antenna, from the coupling coefficient between the power transmission antenna and the power receiving antenna, which is calculated by the calculation unit, and from the table. Therefore, the electric power transmission system of the present invention can properly recognize, from the coupling coefficient, the positional change between the power transmission antenna and the power receiving antenna. Thus, the electric power transmission system can select, based on the positional change, an appropriate frequency for the transmission of electric power, and thereby carry out the transmission of electric power efficiently.

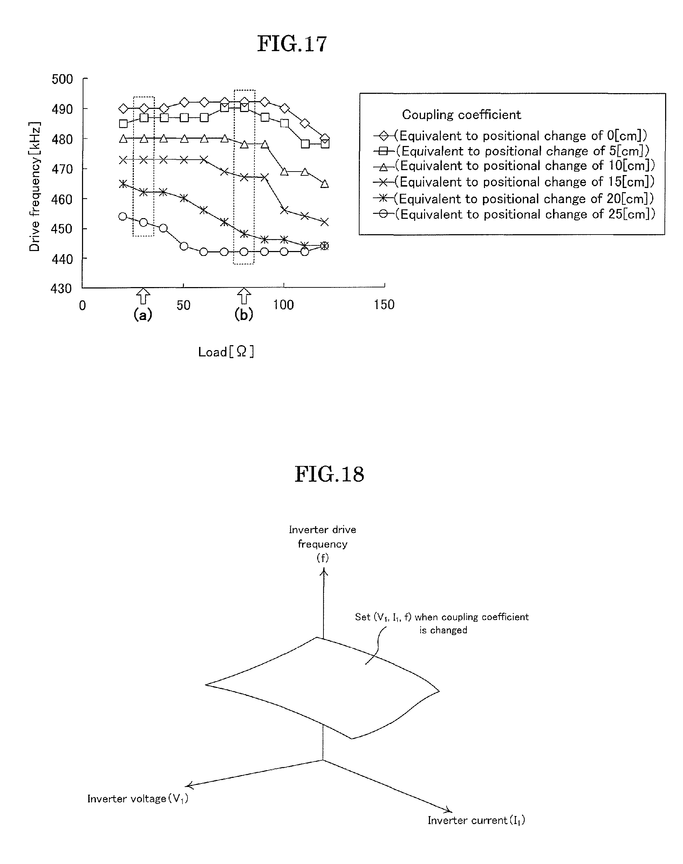

Another embodiment of the present invention will be described. In this other embodiment, only the configuration of the second table is different, and the configuration of the rest of the system is the same as those described above. FIG. 17 is a diagram showing one example of a second data table in which the relationship between a coupling coefficient between the power transmission antenna 140 and the power receiving antenna 210 and the transmission frequency is stored; the second data table is used in an electric power transmission system 100 of this other embodiment.

The data table can support a plurality of types of batteries 240. More specifically, the second data table of this other embodiment is a data table in which the relationship between the positional change (which is proportional to the inverse of the coupling coefficient) between the power transmission antenna 140 and the power receiving antenna 210, the transmission frequency, and the impedance of the battery 240 (load) is defined.

In this case, for example, if the impedance of the battery 240 is (a), a left data table encircled by dotted line is used in determining the frequency for the transmission of electric power. If the impedance of the battery 240 is (b), a right data table encircled by dotted line is used in determining the frequency for the transmission of electric power.

According to this other embodiment described above, the same advantageous effects as those of the previous embodiment can be achieved. An additional advantage is that the system can support a plurality of types of batteries 240.

Another embodiment of the present invention will be described. In the first embodiment, in the first table, the relationship between the current flowing through the inverter unit 130 and the coupling coefficient between the power transmission antenna 140 and the power receiving antenna 210 is stored; the power transmission control unit 150 inputs DC voltage of a specific voltage value to the inverter unit 130, and drives the inverter unit 130 at a specific frequency, and measures the current flowing through the inverter unit 130, and calculates, from the measured current and the first table, the coupling coefficient between the power transmission antenna 140 and the power receiving antenna 210.

On the other hand, if the coupling coefficient between the power transmission antenna 140 and the power receiving antenna 210 takes various values as parameters, for example, there is a relationship as shown in the image diagram of FIG. 18 between voltage value V₁ of DC voltage input to the inverter unit 130, current value I₁, and drive frequency f of the inverter unit 130. That is, if the coupling coefficient between the antennas is changed in various ways, set (V₁, I₁, f) forms a predetermined plane in a coordinate system shown in FIG. 18.

Therefore, it is clear that, if the voltage value V₁ and the drive frequency f are specific values and if the current value I₁ is measured, in addition to that of the first embodiment, there are various ways to calculate the coupling coefficient from the first table in which the relationship between the measured current value I₁ and the coupling coefficient between the antennas is defined.

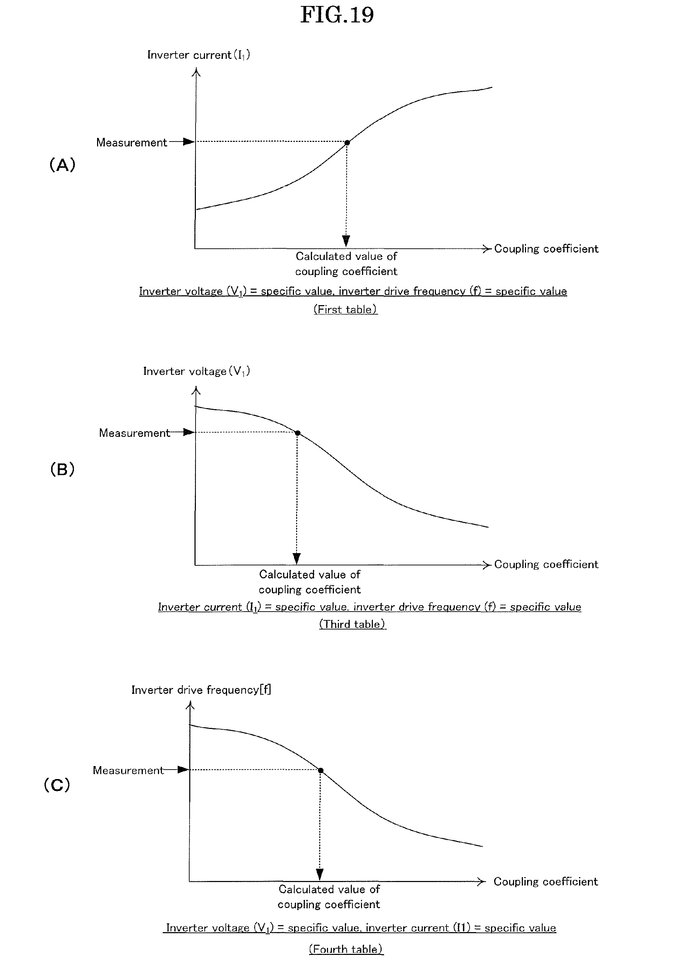

FIG. 19 is a diagram showing an example of a table used in an electric power transmission system according to an embodiment of the present invention. FIG. 19A shows an example of the first table used in the first embodiment.

FIG. 19B shows an example of a table (third table) that is used to calculate the coupling coefficient between the antennas, according to another embodiment.

According to this embodiment, as shown in FIG. 19B, in the table, the relationship between voltage value V₁ of DC voltage input to the inverter unit 130 and the coupling coefficient between the power transmission antenna 140 and the power receiving antenna 210 is stored. The power transmission control unit 150 inputs DC voltage of a specific current value to the inverter unit 130, and drives the inverter unit 130 at a specific frequency, and measures the voltage flowing through the inverter unit 130, and calculates, from the measured voltage and the table (third table) shown in FIG. 19B, the coupling coefficient between the power transmission antenna 140 and the power receiving antenna 210.

FIG. 19C shows an example of a table (fourth table) that is used to calculate the coupling coefficient between the antennas, according to another embodiment.

According to this embodiment, as shown in FIG. 19C, in the table, the relationship between drive frequency f of the inverter unit 130 and the coupling coefficient between the power transmission antenna 140 and the power receiving antenna 210 is stored. The power transmission control unit 150 acquires the drive frequency of the inverter unit 130 when inputting DC voltage of specific voltage and current values to the inverter unit 130, and calculates, from the acquired frequency and the table (fourth table), the coupling coefficient between the power transmission antenna 140 and the power receiving antenna 210.

Even in the other embodiments described above, the electric power transmission system can properly recognize, from the coupling coefficient, the positional change between the power transmission antenna 140 and the power receiving antenna 210, and thereby efficiently carry out the transmission of electric power.

### Industrial Applicability

The electric power transmission system of the present invention is suitably used in a system that charges vehicles, such as electric vehicles (EV) or hybrid electric vehicles (HEV), which have rapidly become popular in recent years. Such an electric power transmission system is provided in a parking space where a vehicle can be stopped. A user of the vehicle parks the vehicle in the parking space in which the electric power transmission system is provided. A power receiving antenna mounted on the vehicle receives electric power from the electric power transmission system. In a conventional system, the frequency for carrying out the transmission of electric power is not necessarily a frequency that yields maximum efficiency based on a coupling coefficient (a positional change between the antennas) between the current power transmission antenna and power receiving antenna. In this case, the problem is that the transmission of electric power cannot be performed efficiently.

In the electric power transmission system of the present invention, the control unit uses a specific frequency to drive the inverter unit, and measures the current flowing through the inverter unit, and calculates the coupling coefficient between the power transmission antenna and the power receiving antenna based on the measured current and the table. Therefore, the electric power transmission system of the present invention can properly recognize the positional change between the power transmission antenna and the power receiving antenna based on the coupling coefficient, and thereby efficiently carry out the transmission of electric power. Therefore, the system is very high in industrial applicability.

### Explanation of Reference Symbols

- 100:: Electric power transmission system
- 110:: AC power supply unit
- 120:: Rectifying and step-up unit
- 130:: Inverter unit
- 140:: Power transmission antenna
- 150:: Power transmission control unit
- 151:: Data table
- 157:: Communication unit
- 210:: Power receiving antenna
- 220:: Rectifying unit
- 230:: Charging unit
- 240:: Battery
- 250:: Charging control unit
- 255:: Interface unit
- 257:: Communication unit
- 260:: Coil case
- 261:: Bottom plate section
- 262:: Side plate section
- 263:: (Upper) opening
- 270:: Coil body
- 271:: Base
- 272:: Conductive section
- 273:: First end portion
- 274:: Second end portion
- 280:: Magnetic shield body
- 285:: Hollow section
- 290:: Metal body lid
- 360:: Coil case
- 370:: Coil body
- 380:: Magnetic shield body
- 390:: Metal body lid

## Claims

1. An electric power transmission system, **characterized by** comprising:
an inverter unit that converts DC voltage to AC voltage of a predetermined frequency to output;
a power transmission antenna to which AC voltage is input from the inverter unit;
a control unit that controls a voltage value of DC voltage input to the inverter unit, and a frequency of AC voltage output by the inverter unit; and
a power receiving antenna that faces the power transmission antenna and is for transmission of electric energy from the power transmission antenna via electromagnetic fields, wherein
based on current flowing through the inverter unit, a coupling coefficient between the power transmission antenna and the power receiving antenna is calculated.

2. The electric power transmission system according to claim 1, **characterized by** comprising
a table in which a relationship between current flowing through the inverter unit and a coupling coefficient between the power transmission antenna and the power receiving antenna is stored, wherein
the control unit inputs DC voltage of a specific voltage value to the inverter unit, and drives the inverter unit at a specific frequency, and measures the current flowing through the inverter unit, and calculates, from the measured current and the table, the coupling coefficient between the power transmission antenna and the power receiving antenna.

3. The electric power transmission system according to claim 2, **characterized in that**
as the specific frequency, a frequency between a frequency that yields maximum transmission efficiency between the power transmission antenna and the power receiving antenna and a frequency that yields minimum transmission efficiency is selected.

4. An electric power transmission system, **characterized by** comprising:
an inverter unit that converts DC voltage to AC voltage of a predetermined frequency to output;
a power transmission antenna to which AC voltage is input from the inverter unit;
a control unit that controls a current value of DC voltage input to the inverter unit, and a frequency of AC voltage output by the inverter unit; and
a power receiving antenna that faces the power transmission antenna and is for transmission of electric energy from the power transmission antenna via electromagnetic fields, wherein
based on voltage of current flowing through the inverter unit, a coupling coefficient between the power transmission antenna and the power receiving antenna is calculated.

5. The electric power transmission system according to claim 4, **characterized by** comprising
a table in which a relationship between a voltage value of DC voltage input to the inverter unit and a coupling coefficient between the power transmission antenna and the power receiving antenna is stored, wherein
the control unit inputs DC voltage of a specific current value to the inverter unit, and drives the inverter unit at a specific frequency, and measures voltage of current flowing through the inverter unit, and calculates, from the measured voltage and the table, the coupling coefficient between the power transmission antenna and the power receiving antenna.

6. An electric power transmission system, **characterized by** comprising:
an inverter unit that converts DC voltage to AC voltage of a predetermined frequency to output;
a power transmission antenna to which AC voltage is input from the inverter unit;
a control unit that controls voltage and current values of DC voltage input to the inverter unit, and a frequency of AC voltage output by the inverter unit;
a power receiving antenna that faces the power transmission antenna and is for transmission of electric energy from the power transmission antenna via electromagnetic fields; and
a table in which a relationship between a drive frequency of the inverter unit and a coupling coefficient between the power transmission antenna and the power receiving antenna is stored, wherein
based on the drive frequency of the inverter unit, a coupling coefficient between the power transmission antenna and the power receiving antenna is calculated.

7. The electric power transmission system according to claim 6, **characterized by** comprising
a table in which a relationship between a drive frequency of the inverter unit and a coupling coefficient between the power transmission antenna and the power receiving antenna is stored, wherein
the control unit acquires the drive frequency of the inverter unit when inputting DC voltage of specific voltage and current values to the inverter unit, and calculates, from the acquired frequency and the table, the coupling coefficient between the power transmission antenna and the power receiving antenna.
